# EUROPEAN PATENT APPLICATION

(11) **EP 3 994 999 A1**
(43) Date of publication of application: **11.05.2022**
(21) Application number: 21176152.3
(22) Date of filing: 27.05.2021
(51) Int. Cl.: A23F 5/24, A23F 5/36, A23F 5/40, A23L 2/12, A23L 5/30

(54) **PACKAGED LIQUID BEVERAGE**

(30) Priority: 06.11.2020 US 202063110470 P
(71) Applicant: Société des Produits Nestlé S.A., 1800 Vevey (CH)
(72) Inventor: ALDAPE FARIAS, Guadalupe Del Carmen, Columbus OH, 43235 (US); NUNEZ, Leticia, Dublin OH, 43017 (US)
(74) Representative: Vossius & Partner Patentanwälte Rechtsanwälte mbB

(57) **Abstract**

The present invention relates to a packaged liquid non-alcoholic beverage comprising a protein wherein the package is flexible, allowing the beverage composition to be broken up in the package by hand after freezing. A further aspect of the invention is a method of preparing a frozen non-alcoholic beverage.

## Description

### Field of the Invention

The present invention relates to a packaged liquid non-alcoholic beverage comprising a protein wherein the package is flexible, allowing the beverage composition to be broken up in the package by hand after freezing. A further aspect of the invention is a method of preparing a non-alcoholic beverage.

### Background of the Invention

Blended iced coffee products are very popular with consumers in cafés and other out-of-home outlets. For example iced coffee "frappé" products where coffee is combined with milk and ice, blended in a mechanical blender and then optionally topped with whipped cream. Blending the beverage creates small ice crystals and generates a foam stabilized by the milk. There is a need to provide a convenient method for consumers to prepare a blended ice coffee at home without needing to use a mechanical blender.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

### Summary of the invention

An object of the present invention is to improve the state of the art and to provide an improved solution to overcome at least some of the inconveniences described above. The object of the present invention is achieved by the subject matter of the independent claims. The dependent claims further develop the idea of the present invention.

Accordingly, the present invention provides in a first aspect a packaged liquid non-alcoholic beverage comprising a protein wherein the package is flexible, allowing the beverage composition to be broken up in the package by hand after freezing.

In a second aspect, the invention relates to a method of preparing a non-alcoholic beverage comprising
a. freezing the packaged liquid non-alcoholic beverage of the invention at between -5°C and -30°C for at least 1 hour to form a frozen packaged beverage;
b. heating the frozen packaged beverage such that the beverage becomes partially melted;
c. manipulating the packaged beverage by hand to break up the frozen contents: and
d. optionally pouring the beverage out of the package into a container.

### Detailed Description of the invention

Consequently the present invention relates in part to a packaged liquid non-alcoholic beverage comprising a protein (for example 0.2 to 6 wt.% protein on a dry basis) wherein the package is flexible, allowing the beverage composition to be broken up in the package by hand after freezing. On partially melting, the packaged liquid non-alcoholic beverage of the invention has a desirable "slushy" texture with small ice crystals. This provides a product with the texture of a blended ice beverage (for example a blended iced coffee) in a convenient manner, without needing to use a mechanical blender.ln an embodiment the packaged liquid non-alcoholic beverage may comprise fat at a level between 0.5 and 8 wt.% on a dry basis, for example between 6 and 9 wt.% on a dry basis. In the context of the present invention, the term fat refers to triglycerides. Fats are the chief component of animal adipose tissue and many plant seeds. Fats which are generally encountered in their liquid form at ambient temperature are commonly referred to as oils. In the present invention the terms oils and fats are interchangeable.

The packaged liquid non-alcoholic beverage of the invention comprises less than 0.5 wt.% alcohol, for example less than 0.05 wt.% alcohol, for example less than 0.01 wt.% alcohol or no alcohol at all. Alcohol here refers to ethanol.

Advantageously, the packaged liquid non-alcoholic beverage of the invention has good functionality without requiring emulsifiers that may be badly perceived by consumers. In an embodiment, the packaged liquid non-alcoholic beverage contains less than 0.1 wt.% of monoacylglycerols (MAG), diacylglycerols (DAG) and diacetylated tartaric acid esters of monoglycerides (DATEM). For example, the packaged liquid non-alcoholic beverage may contain less than 0.01 wt.% of MAG, DAG and DATEM. The packaged liquid non-alcoholic beverage of the invention may be free from added MAG, DAG and DATEM. By the term "free from added" is meant that the packaged liquid non-alcoholic beverage does not contain any MAG, DAG or DATEM which have been added as such. A packaged liquid non-alcoholic beverage free from added MAG, DAG and DATEM may contain minor amounts of these emulsifiers which are present as minor impurities of one or more of the ingredients of the packaged liquid non-alcoholic beverage. For example, vegetable oils may naturally contain small amounts of monoacylglycerols and diacylglycerols. The packaged liquid non-alcoholic beverage of the invention may be free from MAG, DAG and DATEM. Monoacylglycerols are also known as monoglycerides and diacylglycerols are also known as diglycerides.

In an embodiment, the packaged liquid non-alcoholic beverage of the invention contains less than 0.01 wt.% (for example less than 0.001 wt.%) of low molecular weight emulsifiers added as such. In the context of the present invention the term low molecular weight emulsifiers refers to emulsifiers with a molecular weight below 1500 Dalton. The packaged liquid non-alcoholic beverage of the invention may be free from low molecular weight emulsifiers added as such. Low molecular weight emulsifiers include, but are not limited to, monoacylglycerols, diacylglycerols, diacetylated tartaric acid esters of monoglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, succinic acid esters of monoglycerides and diglycerides, lactic acid esters of monoglycerides and diglycerides, lysophospholipids, phospholipids, galactolipids, and sucrose esters of fatty acids.

Phospholipids and galactolipids may be present as components of other ingredients at levels below 10 wt.% in the ingredient, for example below 5 wt.% in the ingredient, but not added as such or in the form of an ingredient having high (e.g. greater than 40 wt.%) levels of phospholipids or galactolipids, for example lecithin. In one embodiment the packaged liquid non-alcoholic beverage according to the invention is free from added monoacylglycerols, diacylglycerols, diacetylated tartaric acid esters of monoglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, succinic acid esters of monoglycerides and diglycerides, lactic acid esters of monoglycerides and diglycerides and sucrose esters of fatty acids. In an embodiment, the packaged liquid non-alcoholic beverage is free from diacetylated tartaric acid esters of monoglycerides, acetylated monoglycerides, sorbitan trioleate, glycerol dioleate, sorbitan tristearate, propyleneglycol monostearate, glycerol monooleate and monostearate, sorbitan monooleate, propylene glycol monolaurate, sorbitan monostearate, sodium stearoyl lactylate, calcium stearoyl lactylate, glycerol sorbitan monopalmitate, succinic acid esters of monoglycerides and diglycerides, lactic acid esters of monoglycerides and diglycerides and sucrose esters of fatty acids.

In an embodiment the packaged liquid non-alcoholic beverage comprises a coffee extract. For example the beverage may comprise 0.3 to 4.0 wt.% coffee extract on a dry basis. The coffee extract according to the invention may be an aqueous coffee extract, for example produced by extracting roasted coffee beans with water. The coffee extract may be soluble coffee, for example pure soluble coffee. The roasted beans are usually ground before being extracted with water. Extraction may be performed by any suitable method known in the art. Methods for extracting coffee beans are well known in the art of production of soluble coffee, e.g. from EP 0826308, and normally involve several extraction steps at increasing temperature. When the desired degree of extraction has been reached, the extracted roast coffee beans are separated from the extract. The separation may be achieved by any suitable means, e.g. filtration, centrifugation, and/or decanting. Before and/or during extraction, volatile aroma compounds may be recovered from the coffee beans and/or the extract, e.g. by steam stripping and/or the use of vacuum, to avoid loss of aroma. The recovered volatile compounds may be added back to the extract after extraction.

The coffee extract may be an extract of roasted Arabica coffee beans, Robusta coffee beans or combinations of these. Coffee beans are the seeds of the coffee plant (*Coffea*). By Arabica coffee beans are meant coffee beans from Arabica coffee plants (*Coffea arabica*) and by Robusta coffee beans are meant beans from Robusta coffee plants (*Coffea canephora*).

The solids content of the packaged liquid non-alcoholic beverage is the weight of dry matter as a percentage of the total weight of the liquid non-alcoholic beverage on a wet basis. In an embodiment, the packaged liquid non-alcoholic beverage has a solids content between 10 and 40 wt.%, for example between 15 and 35 wt.%, for further example between 25 and 35 wt.%. It should be understood that the solids content refers to the solids content of the liquid beverage, ignoring the packaging.

The packaged liquid non-alcoholic beverage may be packaged in a flexible pack which allows the contents of the pack to expand when frozen and also allows the beverage to be broken up by hand whilst still in the pack, In an embodiment, the package is a pouch, for example a flexible pouch. The flexible pouch may for example be formed from a co-extruded laminate.

In an embodiment the packaged liquid non-alcoholic beverage comprises dairy protein. The term "dairy protein" is defined as a protein obtained or derived from a dairy source. Typical dairy proteins may be selected from the group consisting of casein, micellar casein, caseinate, casein hydrolysate, whey, whey proteins, whey hydrolysate, whey concentrate, whey isolate, milk protein concentrate, milk protein isolate, micellar casein, sodium-, potassium- and/or calcium- caseinate, sweet whey, acid whey, α-lactalbumin, β-lactoglobulin, bovine serum albumin, acid casein, α-casein, β-casein and/or γ-casein, or combinations thereof. The dairy protein may be in any form, for example it may be selected from the group consisting of native protein, protein isolate, protein concentrate, hydrolysed protein, fractionated protein and combinations of these. The dairy protein may be provided in the form of ingredients selected from the group consisting of cream, full cream milk, skimmed milk, buttermilk (the liquid phase of the butter churning process), whey (for example sweet whey) and combinations of these. These ingredients may be provided in powdered or liquid form. In an embodiment, the dairy protein comprises buttermilk, for example buttermilk powder. Buttermilk functions as a natural emulsifier to ensure good emulsion and stability. In the present specification, the term "milk" refers to dairy milk. The milk may be bovine milk. When milk-like substances produced from plants are referred to, the term "plant milk" is used. Examples of plant milks include soy milk, oat milk and nut milks.

In an embodiment the packaged liquid non-alcoholic beverage comprises plant protein. The plant protein may be selected from the group consisting of pea protein, fava bean protein, chick pea protein, lentil protein, oat protein, potato protein, soy protein, rice protein, rapeseed protein and combinations of these. The plant protein may be in any form, for example it may be selected from the group consisting of native plant protein, plant protein isolate, plant protein concentrate, hydrolysed plant protein, fractionated plant protein and combinations of these. In an embodiment the plant protein is a plant protein isolate or concentrate. The plant protein may be provided comprised within an ingredient such as a plant milk, for example soy milk, oat milk or nut milk. The protein helps maintain any fat as an evenly distributed emulsion.

In an embodiment the coffee extract comprised in the packaged liquid non-alcoholic beverage is a soluble coffee powder such as a pure soluble coffee powder. For example the coffee extract may consist of dried coffee extract. In an embodiment the coffee extract is present in the packaged liquid non-alcoholic beverage at a level between 2 and 3.5 wt.% on a dry solids basis.

In an embodiment the coffee extract comprised in the packaged liquid non-alcoholic beverage is a liquid coffee extract. The liquid coffee extract may be in the form of a aqueous coffee concentrate which is suitable for preparation of a coffee beverage by dilution with an aqueous liquid. The liquid coffee extract may comprise at least 1.5% by weight of coffee solids.

The coffee extract comprised in the packaged liquid non-alcoholic beverage may be a cold brew coffee, which is a low temperature extract of roasted and ground coffee beans. In an embodiment the coffee extract has been extracted at a temperature between 0 and 90°C. For example an extract of roasted and ground coffee beans extracted using water at a temperature of between 0 and 90° C.

In an embodiment, the packaged liquid non-alcoholic beverage comprises hydrocolloids selected from the group consisting of cellulose, alginate, gellan gum, locust bean gum, starch, xanthan gum and combinations of these. In an embodiment the hydrocolloid is gellan gum. The hydrocolloids may be present at a level of between 0.05 and 5.0 wt.% on a dry basis, for example between 0.1 and 0.2 on a dry basis; for example cellulose, alginate, gellan gum, locust bean gum and xanthan gum may each be present at a level between 0.05 and 0.2 wt.% on a dry basis. Starch may be present at a level between 0.1 and 5.0 wt.% on a dry basis. The starch may be modified starch. The hydrocolloids influence the texture of the partially melted beverage and help maintain any fat as an evenly distributed suspension. In addition the hydrocolloids such as gellan gum or locust bean gum, reduce the size of ice crystals on freezing. When the packaged liquid beverage is partially thawed this results in a beverage with the texture of a blended ice beverage, for example a blended ice coffee. In an embodiment, the packaged liquid non-alcoholic beverage comprises edible salt, for example chlorides or citrates of sodium, calcium, potassium or magnesium. The edible salt may be sodium chloride, calcium chloride or magnesium chloride. The edible salts may be present at a level between 0.001 and 1.0 wt.%, for example between 0.01 and 0.3 wt.%.

In an embodiment, the packaged liquid non-alcoholic beverage comprises saccharides at a level of between 2 and 80 wt.% on a dry basis. The saccharides may include, for example, sucrose, fructose, dextrose, maltose, dextrin, levulose, tagatose, allulose, galactose or hydrolysed starch. The saccharides may be allulose (also known as D-psicose or D-allulose), for example at a level of between 10 and 70 wt.% on a dry solids basis. For example the packaged liquid non-alcoholic beverage may comprise saccharides (for example sucrose) at a level of between 2 and 80 wt.% on a dry basis, for example between 10 and 75 wt.% on a dry basis, for example between 15 and 70 wt.% on a dry basis, for further example between 2 and 20 wt.% on a dry basis. The packaged liquid non-alcoholic beverage may comprise sucrose at a level of between 5 and 20 wt.% on a dry basis. The packaged liquid non-alcoholic beverage may comprise non-saccharide sweeteners, for example sugar alcohols such as maltitol, xylitol, sorbitol, erythritol, mannitol, isomalt and lactitol, alone or in combination. Small saccharides such as monosaccharides are particularly effective at depressing the melting point of the frozen beverage. A lower melting point allows the consumer to partially melt the packaged liquid non-alcoholic beverage more easily.The saccharides may comprise hydrolysed starch. The hydrolysed starch may be the material known commonly as glucose syrup. The packaged liquid non-alcoholic beverage may comprise glucose syrup at a level between 40 and 55 wt.% on a dry solids basis. The glucose syrup may have a dextrose equivalence (DE) between 25 and 42. Dextrose equivalence is an indication of the degree of hydrolysis applied to the starch, a 100DE syrup is completely hydrolysed to dextrose (glucose). The inventors found that a glucose syrup with a DE between 25 and 42 provides a good balance between melting point depression and providing a desirable smooth, slightly chewy texture to the partially melted beverage.

In an embodiment the packaged liquid non-alcoholic beverage comprises coffee extract, milk, buttermilk and gellan gum. In an embodiment the packaged liquid non-alcoholic beverage comprises coffee extract, milk, buttermilk, gellan gum, glucose syrup and sucrose. In an embodiment the packaged liquid non-alcoholic beverage comprises coffee extract, milk, buttermilk, gellan gum, glucose syrup, sucrose and allulose. In an embodiment the packaged liquid non-alcoholic beverage comprises coffee extract, milk, buttermilk, gellan gum and allulose.

The packaged liquid non-alcoholic beverage may be aseptically processed and filled, so it can be stored at ambient temperature, for example at between 15 and 25°C.

An aspect of the invention provides a method of preparing a non-alcoholic beverage comprising
a. freezing the packaged liquid non-alcoholic beverage of the invention at between -5°C and -30°C for at least 1 hour to form a frozen packaged beverage;
b. heating the frozen packaged beverage such that the beverage becomes partially melted;
c. manipulating the packaged beverage by hand to break up the frozen contents: and
d. optionally pouring the beverage out of the package into a container (for example a drinking receptacle such as a glass).

Advantageously, the non-alcoholic beverage may be prepared without using a mechanical blender or similar equipment.

The packaged liquid non-alcoholic beverage may be frozen in a domestic freezer. Most domestic freezers are at a temperature of around -18°C. The packaged liquid non-alcoholic beverage may for example be frozen at a temperature between -15°C and -20°C. The packaged liquid non-alcoholic beverage may be frozen for at least 1 hour, for example at least 2, 3, 4, 5, 6, 7, 8, 9, 10, 11 or 12 hours.

The frozen packaged beverage may be heated such that it becomes partially melted. For example the frozen packaged beverage may be heated such that between 10 and 90 wt.%, for example between 20 and 80 wt.%, for further example between 30 and 40 wt.% of the water present in the packaged beverage at the point when it was frozen is melted (i.e. is in liquid form). The quantity of water that is in the liquid form may be measured by pNMR (proton nuclear magnetic resonance) or via measuring the melting enthalpy on heating using calorimetry such as differential scanning calorimetry (DSC).

In an embodiment the frozen packaged beverage is partially melted by use of a microwave oven.

In an embodiment, the frozen packaged beverage is heated such that it becomes partially melted by being placed at a temperature of between 15°C and 50°C (for example between 15°C and 25°C) for at least 5 minutes (for example at least 10 minutes, for further example at least 15 minutes). The term "heating" can include raising the temperature of the frozen packaged beverage by placing it at room temperature, for example at between 15 and 25°C, for further example 18 to 22°C. The frozen packaged beverage may be partially melted by a combination of microwave heating and being left at a temperature of between 15°C and 50°C (for example between 15°C and 25°C) for at least 5 minutes (for example at least 10 minutes, for further example at least 15 minutes).

In an embodiment the packaged beverage is manipulated by hand to break up the frozen contents at room temperature, for example at between 15 and 25°C.

In an embodiment, water is added to the beverage, for example to the partially melted beverage. The water may be water as such or it may be comprised within other consumable aqueous liquids such as milk or liquid coffee. For convenience, the water may be added to the beverage (for example the partially melted beverage) whilst the beverage is still in the package. For example, water may be added to the beverage in the package before manipulating the packaged beverage by hand to break up the frozen contents, for example water may be added to the beverage in the package before manipulating the packaged beverage by hand to break up the frozen contents and after heating the frozen packaged beverage such that the beverage becomes partially melted. The water may be added at room temperature, for example at between 15 and 25°C.

In an embodiment, water is added to the partially melted beverage after pouring the beverage out into a container.

Those skilled in the art will understand that they can freely combine all features of the present invention disclosed herein. In particular, features described for the product of the present invention may be combined with the method of the present invention and vice versa. Further, features described for different embodiments of the present invention may be combined. Where known equivalents exist to specific features, such equivalents are incorporated as if specifically referred to in this specification.

Further advantages and features of the present invention are apparent from the figures and non-limiting examples.

### Examples

### Example 1: Preparation of a liquid beverage

The ingredients listed in the table below were combined. The gellan gum was hydrated in water and the soluble coffee powder was dissolved before being combined with the other ingredients and subjected to high shear mixing. The mix was homogenized, heat-treated and aseptically filled into a flexible spouted stand-up pouch.

| Ingredient | Sample A | Sample B |
|---|---|---|
| whole milk | 30 | 30 |
| cream | 6 | 6 |
| soluble coffee powder | 0.8 | 0.8 |
| buttermilk powder | 0.5 | 0.5 |
| gellan gum | 0.1 | 0.1 |
| 25DE glucose syrup | 0 | 20 |
| sucrose | 0 | 5.5 |
| allulose | 19 | 0 |
| water | remainder | remainder |

### Example 2: Melting properties

The filled pouches containing Sample A and Sample B had a portable temperature datalogger (DataTrace^{®} MesaLabs, Lakewood, CO) imbedded in them. The datalogger was programmed to record every 30 seconds. The filled pouches were frozen at -28 °C for 48 hours. The frozen pouches were then removed from the freezer and allowed to warm up at 20 °C for 24 hours. The data from the datalogger was downloaded and analysed to give a freezing and thawing temperatures. During warming it was observed that Sample A (comprising allulose) started to soften at a temperature of -19.1 °C and was totally soft at -13 °C. By contrast, sample B (comprising glucose syrup and sucrose) required a higher temperature of -15.9 °C before starting to soften and was not totally soft until reaching at -9.7 °C. Sample A, comprising allulose, was more readily broken up by hand when warmed after freezing.

Various features and embodiments of the present invention will now be described with reference to the following numbered paragraphs (paras).
1. A packaged liquid non-alcoholic beverage wherein the package is flexible, allowing the beverage composition to be broken up in the package by hand after freezing.
2. The packaged liquid non-alcoholic beverage of para 1 wherein the liquid beverage comprises protein.
3. The packaged liquid non-alcoholic beverage of any one of paras 1 to 2 wherein the liquid beverage comprises a coffee extract.
4. The packaged liquid non-alcoholic beverage of any one of paras 1 to 3 wherein the liquid beverage has a solids content between 10 and 40 wt.%.
5. The packaged liquid non-alcoholic beverage of any one of paras 1 to 4 wherein the package is a pouch.
6. The packaged liquid non-alcoholic beverage of any one of paras 2 to 5 wherein the protein is dairy protein or plant protein.
7. The packaged liquid non-alcoholic beverage of any one of paras 3 to 6 wherein the coffee extract is a soluble coffee powder or a liquid coffee extract.
8. The packaged liquid non-alcoholic beverage of para 7 wherein the coffee extract has been extracted at a temperature between 0 and 90°C.
9. The packaged liquid non-alcoholic beverage of any one of paras 1 to 8 comprising hydrocolloids, for example selected from the group consisting of cellulose, alginate, gellan gum, locust bean gum, starch, xanthan gum and combinations of these.
10. The packaged liquid non-alcoholic beverage of any one of paras 1 to 9 comprising saccharides at a level of 2 and 80 wt.% on a solids basis.
11. The packaged liquid non-alcoholic beverage of any one of paras 1 to 10 comprising allulose at a level of 10 and 80 wt.% on a solids basis, for example between 15 and 70 wt.% on a solids basis.
12. The packaged liquid non-alcoholic beverage of any one of paras 1 to 11 wherein the beverage is an aseptically processed beverage, suitable for storage at ambient temperature.
13. Method of preparing a non-alcoholic beverage comprising
   a. freezing the packaged liquid non-alcoholic beverage of any one of paras 1 to 12 at between -5°C and -30°C for at least 1 hour to form a frozen packaged beverage;
   b. heating the frozen packaged beverage such that the beverage becomes partially melted;
   c. manipulating the packaged beverage by hand to break up the frozen content; and
   d. optionally pouring the beverage out of the package into a container.
14. A method according to para 13 wherein the frozen packaged beverage is partially melted by use of a microwave oven.
15. A method according to para 13 or para 14 wherein the frozen packaged beverage is partially melted by being placed at a temperature of between 15°C and 50°C for at least 5 minutes.
16. A method according to any one of paras 13 to 15 wherein water is added to the partially melted beverage.
17. A method according to para 16 wherein the water is added to the partially melted beverage whilst still in the package, or after pouring the beverage out into a container.

## Claims

1. A packaged liquid non-alcoholic beverage comprising a protein wherein the package is flexible, allowing the beverage composition to be broken up in the package by hand after freezing.

2. The packaged liquid non-alcoholic beverage of claim 1 wherein the liquid beverage comprises a coffee extract.

3. The packaged liquid non-alcoholic beverage of claim 1 or claim 2 wherein the liquid beverage has a solids content between 10 and 40 wt.%.

4. The packaged liquid non-alcoholic beverage of any one of claims 1 to 3 wherein the package is a pouch.

5. The packaged liquid non-alcoholic beverage of any one of claims 1 to 4 wherein the protein is dairy protein or plant protein.

6. The packaged liquid non-alcoholic beverage of any one of claims 2 to 5 wherein the coffee extract is a soluble coffee powder or a liquid coffee extract.

7. The packaged liquid non-alcoholic beverage of claim 6 wherein the coffee extract has been extracted at a temperature between 0 and 90°C.

8. The packaged liquid non-alcoholic beverage of any one of claims 1 to 7 comprising hydrocolloids selected from the group consisting of cellulose, alginate, gellan gum, locust bean gum, starch, xanthan gum and combinations of these.

9. The packaged liquid non-alcoholic beverage of any one of claims 1 to 8 comprising saccharides at a level of 2 and 80 wt.% on a solids basis.

10. The packaged liquid non-alcoholic beverage of any one of claims 1 to 9 wherein the beverage is an aseptically processed beverage, suitable for storage at ambient temperature.

11. Method of preparing a non-alcoholic beverage comprising
a. freezing the packaged liquid non-alcoholic beverage of any one of claims 1 to 10 at between -5°C and -30°C for at least 1 hour to form a frozen packaged beverage;
b. heating the frozen packaged beverage such that the beverage becomes partially melted;
c. manipulating the packaged beverage by hand to break up the frozen content; and
d. optionally pouring the beverage out of the package into a container.

12. A method according to claim 11 wherein the frozen packaged beverage is partially melted by use of a microwave oven.

13. A method according to claim 11 or claim 12 wherein the frozen packaged beverage is partially melted by being placed at a temperature of between 15°C and 50°C for at least 5 minutes.

14. A method according to any one of claims 11 to 13 wherein water is added to the partially melted beverage.

15. A method according to claim 14 wherein the water is added to the partially melted beverage whilst still in the package, or after pouring the beverage out into a container.
